# EUROPEAN PATENT APPLICATION

(11) **EP 3 364 313 A1**
(43) Date of publication of application: **22.08.2018**
(21) Application number: 17202151.1
(22) Date of filing: 16.11.2017
(51) Int. Cl.: G06F 17/30, G05B 19/042

(54) **CONTROL DEVICE**

(30) Priority: 17.02.2017 JP 2017027955
(71) Applicant: Omron Corporation, Kyoto-shi, Kyoto 600-8530 (JP)
(72) Inventor: OTA, Masanori, Kyoto-shi, Kyoto 600-8530 (JP); NISHIYAMA, Yoshihide, Kyoto-shi, Kyoto 600-8530 (JP); EGUCHI, Shigeyuki, Kyoto-shi, Kyoto 600-8530 (JP)
(74) Representative: 2K Patentanwälte Blasberg Kewitz & Reichel

(57) **Abstract**

A control device having a data collection function which facilitates subsequent analysis and interpretation is provided. A control device includes a time series data storage unit that stores designated data in a time series manner; a chapter information storage unit that stores chapter information for associating a designated timing with data stored in the time series data storage unit; and a data storage processing unit that controls storage of data in the time series data storage unit and storage of chapter information in the chapter information storage unit. When receiving an instruction to register chapter information, the data storage processing unit stores information indicating a type of chapter information included in the instruction and information for specifying the latest data stored in the time series data storage unit at a timing at which the instruction is received in the chapter information storage unit as chapter information.

## Description

### BACKGROUND OF THE INVENTION

### Field of the Invention

The disclosure relates to a control device having a function of storing designated data in a time series manner.

### Description of Related Art

Factory automation (FA) technologies using control devices such as programmable logic controllers (PLCs) have become widespread in various production fields. There is demand for subsequent analysis of data handled by such control devices.

Patent Document 1, for example, discloses a data collection device which can collect data reliably at a high speed from a CPU unit of a PLC. To be more specific, Patent Document 1 discloses the data collection device which collects I/O data from the CPU unit connected to a PCL bus of the PLC. In addition, Patent Document 2 discloses a data collection device which is connected to a programmable logic controller to collect and hold data stored in a memory of the programmable logic controller.

Patent Document 3 discloses a configuration in which data trace information is provided from a tool device to a CPU unit with respect to collection of data of a programmable logic controller.

Due to the advancement of information and communication technology, collection and storage of a large volume of data have become possible even for control devices. Patent Document 4, for example, discloses a programmable logic controller in which a database is constructed on a non-volatile memory which is a non-volatile storage device having no limitation on the number of data write operations.

### [Prior Art Documents]

### [Patent Documents]

[Patent Document 1] Japanese Patent Application Laid-Open (JP-A) No. 2004-199670
[Patent Document 2] Japanese Patent Application Laid-Open (JP-A) No. 2007-219920
[Patent Document 3] Japanese Patent Application Laid-Open (JP-A) No. 2012-194683
[Patent Document 4] Japanese Patent Application Laid-Open (JP-A) No. 2015-005062.

Data collected in a database is normally used in subsequent analysis, interpretation, and the like. Thus, even when a configuration in which a large volume of data is collected from a database built in such a control device described above is employed, a mechanism which facilitates subsequent analysis and interpretation is necessary.

### SUMMARY OF THE INVENTION

A control device according to one or some exemplary embodiments of the invention includes a time series data storage unit that stores designated data in a time series manner, a chapter information storage unit that stores chapter information for associating a designated timing with data stored in the time series data storage unit, and a data storage processing unit that controls storage of data in the time series data storage unit and storage of chapter information in the chapter information storage unit. When receiving an instruction to register chapter information, the data storage processing unit stores information indicating a type of chapter information included in the instruction and information for specifying the latest data stored in the time series data storage unit at a timing at which the instruction is received in the chapter information storage unit as chapter information.

### BRIEF DESCRIPTION OF THE DRAWINGS

FIG. 1 is a schematic diagram showing an example of an overall configuration of a control system according to an embodiment.
FIG. 2 is a block diagram showing an example of a hardware configuration of a control device constituting the control system according to the embodiment.
FIG. 3 is a schematic diagram for describing an overview of a function of a time series database provided by the control device according to the embodiment.
FIG. 4 is a schematic diagram for describing an overview of a function of the time series database provided by the control device according to the embodiment.
FIG. 5 is a schematic diagram for describing an overview of a function of the time series database provided by the control device according to the embodiment.
FIG. 6 is a block diagram showing an example of a software configuration of a CPU unit constituting the control system according to the embodiment.
FIG. 7 is a schematic diagram for outlining a data structure of a time series database built into the control device according to the embodiment.
FIG. 8 is a schematic diagram for outlining a data structure of records of a time series observation value database stored in the control device according to the embodiment.
FIG. 9 is a schematic diagram for outlining a data structure of records of a chapter information database stored in the control device according to the embodiment.
FIG. 10 is a schematic diagram for describing a process of registering chapter information in the control device according to the embodiment.
FIG. 11 is a schematic diagram for describing the process of registering chapter information in the control device according to the embodiment.
FIG. 12 is a schematic diagram for describing a data search process using chapter information of the control device according to the embodiment.
FIG. 13 is a schematic diagram showing an example in which the control system according to the embodiment is applied to a production line on which production is performed in lots.
FIG. 14 is a schematic diagram showing an example in which the control system according to the embodiment is applied to a continuous series system having no temporal segments.
FIG. 15 is a schematic diagram showing an example in which the control system according to the embodiment is applied to a system in which an event occurs.
FIG. 16 is a diagram showing an example of a user program executed in the control device according to the embodiment.

### DESCRIPTION OF THE EMBODIMENTS

The disclosure relates to a mechanism which facilitates subsequent analysis and interpretation in a control device having a data collection function to satisfy the above-described demand.

A control device according to one or some exemplary embodiments of the invention includes a time series data storage unit that stores designated data in a time series manner, a chapter information storage unit that stores chapter information for associating a designated timing with data stored in the time series data storage unit, and a data storage processing unit that controls storage of data in the time series data storage unit and storage of chapter information in the chapter information storage unit. When receiving an instruction to register chapter information, the data storage processing unit stores information indicating a type of chapter information included in the instruction and information for specifying the latest data stored in the time series data storage unit at a timing at which the instruction is received in the chapter information storage unit as chapter information.

According to one or some exemplary embodiments of the invention, the time series data storage unit stores a record in which an indicator including information specifying a timing or a time point is associated with data including an observation value corresponding to the information in a time series manner.

According to one or some exemplary embodiments of the invention, the chapter information storage unit stores a record in which an indicator including information indicating a type of chapter information is associated with an indicator of a record of the time series data storage unit serving as a reference target.

According to one or some exemplary embodiments of the invention, an indicator of each record stored in the chapter information storage unit includes identification information sequentially updated in accordance with a prescribed rule, identification information for specifying chapter information, and information indicating a type of chapter information.

According to one or some exemplary embodiments of the invention, the type of chapter information defines that the corresponding chapter information indicates one of a start of a chapter section and an end of a chapter section.

According to one or some exemplary embodiments of the invention, the control device further includes a data search processing unit that searches for specific chapter information from the chapter information stored in the chapter information storage unit when an instruction to search for the specific chapter information is received, and searches for data corresponding to the specific chapter information among the data stored in the time series data storage unit based on the searched one or a plurality of pieces of chapter information.

According to one or some exemplary embodiments of the invention, the control device further includes an application that issues an instruction for the specific chapter information to the data search processing unit.

According to one or some exemplary embodiments of the invention, the data search processing unit receives an instruction for the specific chapter information from outside of the control device.

According to one or some exemplary embodiments of the invention, a mechanism which enables subsequent analysis and interpretation to be easily performed can be provided in a control device having a data collection function.

An embodiment of the invention will be described in detail with reference to the drawings. Note that the same reference signs are given to the same or equivalent parts of the drawings, and description thereof will not be repeated.

### <A. Example of overall configuration of control system>

First, an example of an overall configuration of a control system 1 that includes a control device according to the embodiment will be described.

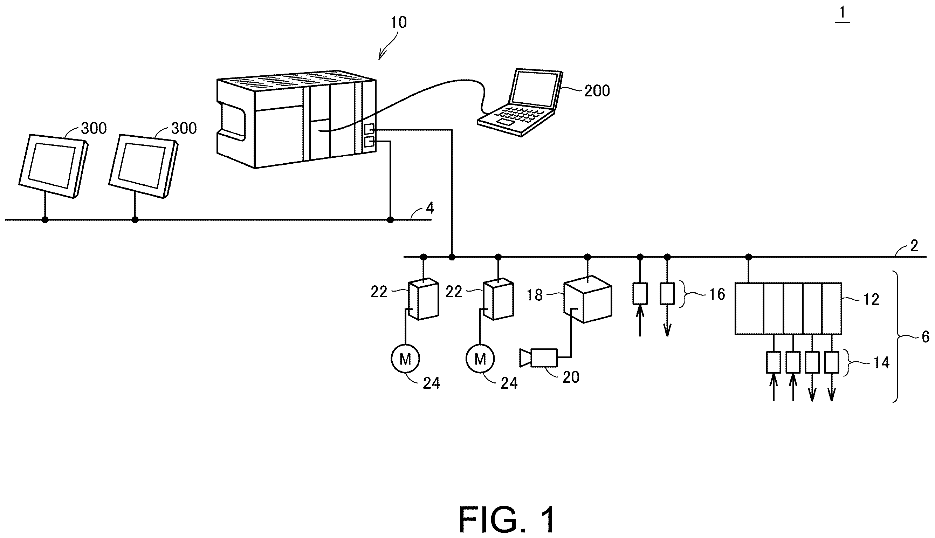

FIG. 1 is a schematic diagram showing an example of the overall configuration of the control system 1 according to an embodiment. Referring to FIG. 1, the control system 1 according to the present embodiment includes as principal constituent elements a control device 10 which controls a control target and a support device 200 which is connected to the control device 10.

The control device 10 may be realized by a kind of computer such as a programmable logic controller (PLC). The control device 10 is connected to a field device group 6 via a first field network 2 and to one or a plurality of display devices 300 via a second field network 4. The control device 10 exchanges data with the devices connected via the respective networks.

The control device 10 has a control logic (which will also be referred to as a "PLC engine" below) for executing various kinds of arithmetic operation for controlling facilities and machines. In addition to the PLC engine, the control device 10 has a collection function of collecting data measured by the field device group 6 and transferred to the control device 10 (which will also be referred to as "input data" below). Furthermore, the control device 10 also has a monitoring function of monitoring collected input data.

The first field network 2 and the second field network 4 may employ a network on which periodical communication is performed to guarantee data arrival times. As networks on which such periodical communication is performed, EtherCAT (registered trademark), EtherNet/IP (registered trademark), DeviceNet (registered trademark), CompoNet (registered trademark), and the like are known.

The field device group 6 includes a device which collects input data from a control target or a manufacturing device, a production line, and the like related to control (which will also be referred to as a "field" below). As such devices which collect input data, an input relay, various sensors, and the like are assumed. The field device group 6 further includes a device having any type of influence on the field based on commands generated by the control device 10 (which will also be referred to as "output data" below). As such devices having any type of influence on the field, an output relay, a contactor, a servo driver and a servo motor, and any type of actuator are assumed. The field device group 6 exchanges data including input data and output data with the control device 10 via the first field network 2.

In the example of the configuration shown in FIG. 1, the field device group 6 includes a remote input/output (I/O) device 12, a relay group 14, an image sensor 18, a camera 20, servo drivers 22, and servo motors 24.

The remote I/O device 12 includes a communication unit which performs communication via the first field network 2 and an input and output unit (which will also be referred to as an "I/O unit" below) for acquiring input data and outputting output data. The control device 10 and the field exchange input data and output data with each other via the I/O unit. FIG. 1 shows an example in which digital signals are exchanged as input data and output data via the relay group 14.

The I/O unit may be connected directly to the field network. FIG. 1 shows an example in which an I/O unit 16 is connected directly to the first field network 2.

The image sensor 18 performs an image measurement process such as pattern matching on image data obtained through imaging of the camera 20 and transmits a result of the process to the control device 10.

The servo drivers 22 drive the servo motors 24 in accordance with data (e.g., a position command, etc.) output from the control device 10.

As described above, although data is exchanged between the control device 10 and the field device group 6 via the first field network 2, the exchanged data is updated in short cycles of an order of hundreds of µsec to dozens of msec. Note that an updating process of data exchanged as described above can also be referred to as an "I/O refresh process."

In addition, the display devices 300 connected to the control device 10 via the second field network 4 receive operations from a user, transmit commands and the like in accordance with user operations to the control device 10, and graphically display results of arithmetic operations of the control device 10.

The support device 200 is a device which supports preparation necessary for the control device 10 to control control targets. Specifically, the support device 200 provides an environment for developing a program to be executed by the control device 10 (a program production/editing tool, a parser, a complier, or the like), a setting environment for setting parameters (or configurations) of the control device 10 and various devices connected to the control device 10, a function of transmitting a generated user program to the control device 10, a function of modifying and changing online a user program and the like to be executed in the control device 10, and the like.

### <B. Example of hardware configuration of control device>

Next, an example of a hardware configuration of the control device 10 constituting the control system 1 according to the present embodiment will be described.

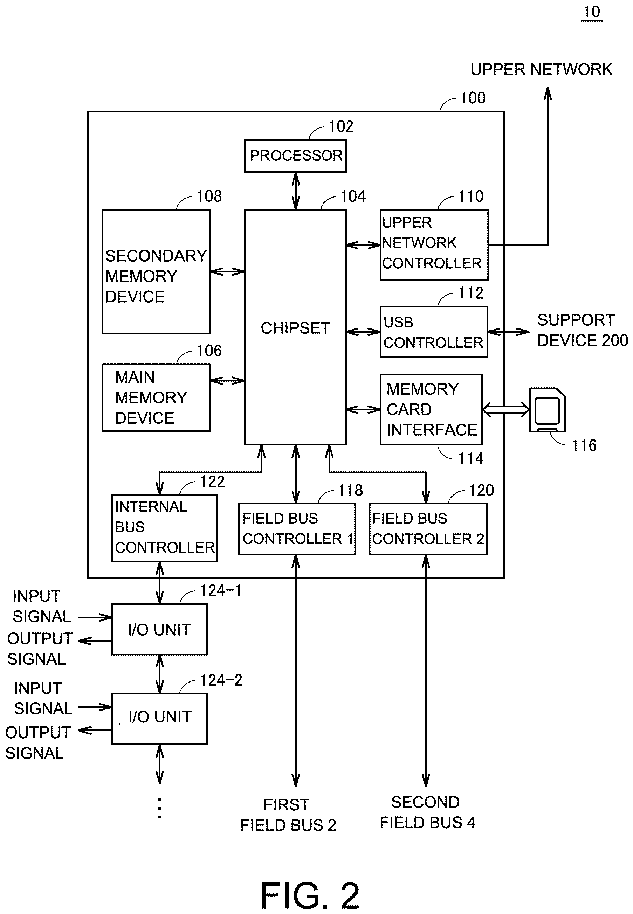

FIG. 2 is a block diagram showing an example of the hardware configuration of the control device 10 constituting the control system 1 according to the present embodiment. Referring to FIG. 2, the control device 10 includes an arithmetic processing unit and one or a plurality of I/O units 124-1, 124-2, and the like. The arithmetic processing unit will also be referred to as a "CPU unit 100."

The CPU unit 100 includes a processor 102, a chipset 104, a main memory device 106, a secondary memory device 108, an upper network controller 110, a Universal Serial Bus (USB) controller 112, a memory card interface 114, an internal bus controller 122, and field bus controllers 118 and 120.

The processor 102 is configured by a central processing unit (CPU), a micro-processing unit (MPU), or the like, reads various programs stored in the secondary memory device 108 and develops the programs in the main memory device 106 to be executed, thereby performing control on control targets and realizing various kinds of processes as will be described below. The chipset 104 realizes overall processes of the control device 10 by controlling the processor 102 and devices.

The secondary memory device 108 stores not only a system program for realizing the PLC engine but also a user program to be executed using the PLC engine. Furthermore, the secondary memory device 108 also stores a time series database which will be described below.

The upper network controller 110 controls exchange of data with other devices via an upper network. The USB controller 112 controls exchange of data with the support device 200 using USB connection.

The memory card interface 114 is configured to have a memory card 116 attachable thereto and enables data to be written on the memory card 116 and various kinds of data (a user program, trace data, and the like) to be read from the memory card 116.

The internal bus controller 122 is an interface which enables data to be exchanged with the I/O units 124-1, 124-2, and the like mounted in the control device 10.

The field bus controller 118 controls exchange of data with other devices via the first field network 2. Likewise, the field bus controller 120 controls exchange of data with other devices via the second field network 4.

Although FIG. 2 shows the example of the configuration in which functions necessary for the processor 102 to execute programs are provided, some or all of the provided functions may be implemented using a dedicated hardware circuit (e.g., an application specific integrated circuit (ASIC) or a field-programmable gate array (FPGA)). Alternatively, main parts of the control device 10 may be realized using hardware conforming to general architecture (e.g., an industrial personal computer based on a general personal computer). In this case, a plurality of operating systems (OSs) for different applications may be executed in parallel and necessary applications may be executed on respective OSs using a virtualization technology.

### <C. Overview of time series database>

Next, an overview of a time series database provided by the control device 10 according to the present embodiment will be described. In this specification, "time series database" means a database that deals with time series data and also means a memory function of storing a series of values obtained by observing a temporal change of an arbitrary target continuously (or discontinuously with a fixed time interval) (the values are also collectively referred to as "time series data").

The time series database provided by the control device 10 according to the present embodiment collects data in a time series manner and stores information of indices or chapters in addition to collection of time series data. By storing the information of indices or chapters together, availability of stored time series data in subsequent access can be improved. For the sake of convenience in description, the information of indices or chapters will be referred to as "chapter information" below. The term "chapter information" is only for convenience, and an arbitrary data structure can be employed for the stored data structure in accordance with the time series database.

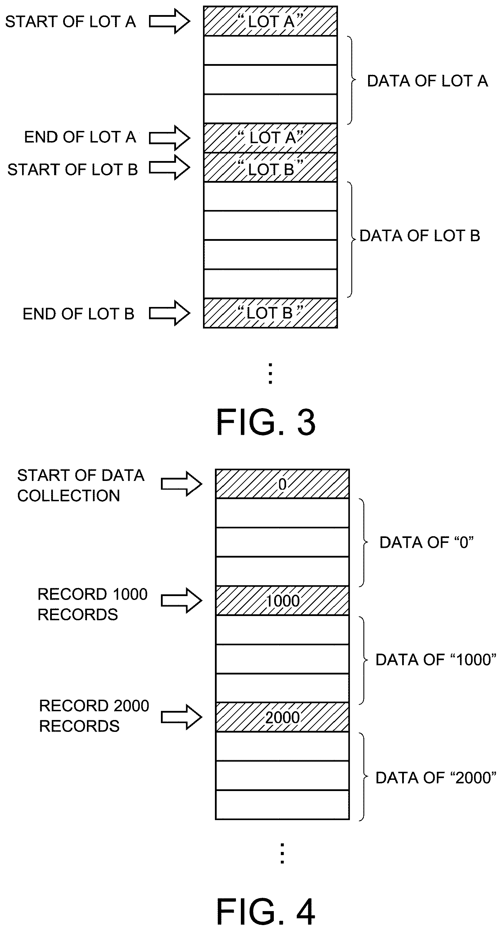

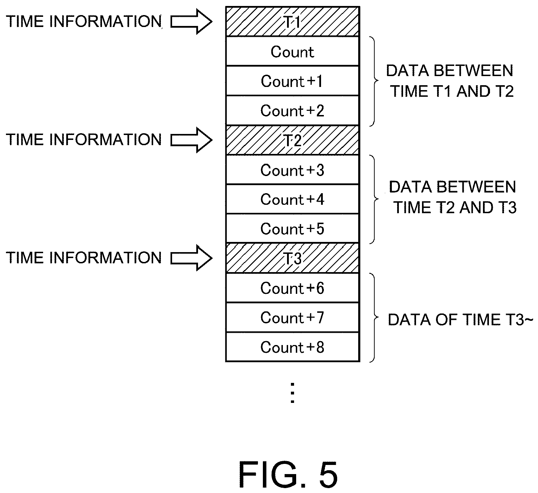

FIGs. 3 to 5 are schematic diagrams for describing overviews of functions of the time series database provided by the control device 10 according to the present embodiment. FIG. 3 shows an example in which information of manufacturing lots, each of which is one chapter of production, is collected as chapter information from an arbitrary manufacturing device, a production line, or the like. FIG. 4 shows an example in which information that the number of pieces of collected data (which will also be referred to as a "record") has reached a prescribed number of units (e.g., 1000 records) is collected as chapter information. FIG. 5 shows an example in which arbitrary time points are collected as chapter information.

FIG. 3 shows an example in which arbitrary observation values from the field including a manufacturing device or a production line are collected in a time series manner and chapter information is added thereto in association with the collected time series data. More specifically, having the fact that a lot A is started at an arbitrary timing in a target manufacturing device or production line as an event, chapter information including information for specifying the event is added.

If the chapter information is used in the above-described form, a start and an end of each manufacturing lot can be recorded. That is, the above-described form of use is effective when time series data is collected for each manufacturing lot.

As a specific example for implementing this form, an instruction for recording chapter information is described in a user program to be executed by the control device 10, and a flag indicating a start or an end of a manufacturing lot or the like is defined as a condition for executing the instruction. A "lot number" in the form of a sequence of letters may be designated in the instruction at a time of a start or an end of a manufacturing lot as chapter information.

FIG. 4 shows an example in which arbitrary observation values obtained from the field such as a manufacturing device or a production line are collected in a time series manner and chapter information is added thereto in association with time series data of the collected values. More specifically, having the fact that the number of pieces of collected time series data has reached a predetermined number (e.g., 1000 records) as an event, chapter information corresponding to the event is added. Alternatively, chapter information may be added at each of predetermined time intervals.

Since the time series data can be divided based on the chapter information by using the chapter information in the above-described form, the collected time series data can be searched for or processed for a predetermined number of pieces of the data. That is, this method is effective when arbitrary observation values are continuously collected.

FIG. 5 shows an example in which arbitrary observation values obtained from the field such as a manufacturing device or a production line are collected in a time series manner and chapter information is added thereto in association with time series data of the collected values. In the example shown in FIG. 5, a case in which only counter values (which are equivalent to times that have elapsed from a reference time) obtained from a counter installed inside the PLC or implemented on a field network, rather than time point information, are stored as time series data is shown. When such a time series data collection mode is employed, it is difficult to search for time series data using a time point as a search key.

Thus, by adding a time point corresponding to a prescribed interval or occurrence of an arbitrary event as chapter information, it is possible to search for the chapter information from the time series data using the time point as a search key, and thus time series data to be searched for can be acquired based on the searched-for chapter information. As a more specific data use procedure, pieces of time series data located before and after chapter data extracted using a time point as a search key, and the like are extracted as targets.

Note that, although FIGs. 3 to 5 show schematic diagrams in which the chapter information is recorded in parallel with the records in which pieces of data contained in the time series database are stored for the sake of convenience in description, a form in which the chapter information is recorded is not particularly limited, and the chapter information may be managed using an arbitrary method. In the following description, a method in which time series data and chapter information are logically separated and stored and held will be described as an embodiment.

### <D. Example of software configuration of control device>

Next, an example of a software configuration of the CPU unit 100 constituting the control system 1 according to the present embodiment will be described.

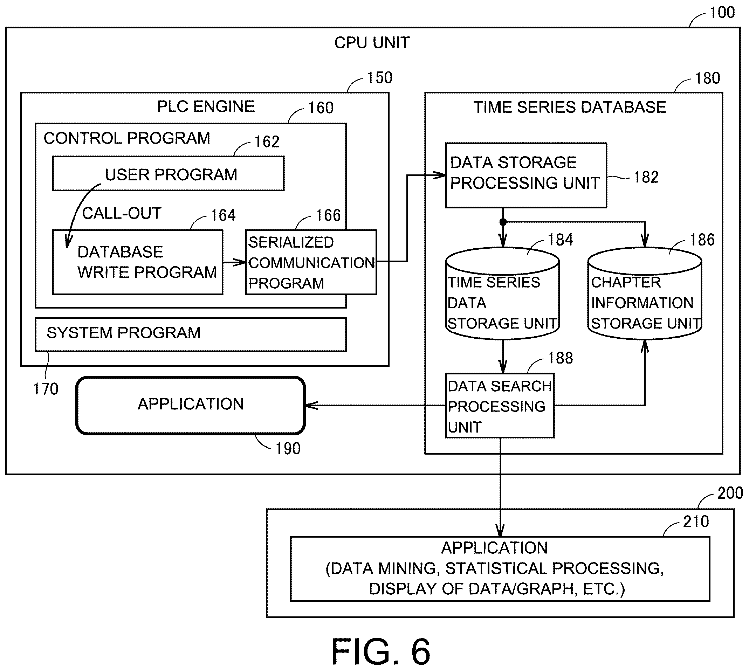

FIG. 6 is a block diagram showing an example of the software configuration of the CPU unit 100 constituting the control system 1 according to the present embodiment. Referring to FIG. 6, the CPU unit 100 includes a PLC engine 150, a time series database 180, and an arbitrary application 190.

The PLC engine 150 is realized typically by the processor 102 of the CPU unit 100 executing various programs. More specifically, the PLC engine 150 is constituted by a control program 160 and a system program 170.

The control program 160 can be arbitrarily configured in accordance with a use or the like of the control device 10 including the CPU unit 100, and is constituted typically by a user program 162, a database write program 164, and a serialized communication program 166.

The user program 162 is a program arbitrarily produced in accordance with performance, control, and the like required for the control device 10 and can be provided using, for example, a ladder logic using function blocks or the like.

The database write program 164 is called out with a command defined within the user program 162 to write data designated for the time series database 180. The database write program 164 can not only write designated data but can also add the chapter information described with reference to FIGs. 3 to 5 to the time series database 180.

The serialized communication program 166 performs a serialization process on data written in the time series database 180 by the database write program 164. More specifically, the serialized communication program 166 executes a process (serialization) of converting time series data into a byte sequence that can be stored. The target data is converted into a predetermined byte sequence in the serialization process and then stored in the time series database 180.

The system program 170 provides a function of managing a process, task, and the like to be executed by the CPU unit 100. The system program 170 typically provides a function of writing a scheduler that manages execution timings and the like and data in the time series database 180 or an external file.

The time series database 180 is typically disposed in the main memory device 106 or the secondary memory device 108 (refer to FIG. 2), having a function of storing data and a function of responding with designated data to a request (query) from outside. In the control device 10 according to the present embodiment, the time series database has a function of storing the chapter information described with reference to FIGs. 3 to 5 along with time series data. Note that the time series database 180 may compress stored time series data using a known method and then store the compressed data in a data storage processing unit 182.

More specifically, the time series database 180 includes the data storage processing unit 182, a time series data storage unit 184, a chapter information storage unit 186, and a data search processing unit 188.

The data storage processing unit 182 controls storage of data by the time series data storage unit 184 and storage of chapter information by the chapter information storage unit 186. That is, the data storage processing unit 182 performs a process of storing the time series data and the chapter information in the time series database 180. More specifically, the data storage processing unit 182 adds records of the time series data to the time series data storage unit 184 in accordance with various commands, data, and the like from the database write program 164, or appropriately updates chapter information stored in the chapter information storage unit 186.

The time series data storage unit 184 stores designated data in a time series manner. More specifically, the time series data storage unit 184 stores arbitrary observation values such as input values, computed values, output values, manufacturing information, and the like to be held in the control device 10 (the CPU unit 100) in a time series manner. These observation values sequentially stored in a time series manner correspond to time series data. The time series data storage unit 184 may be realized as a file of the database. Data stored in the time series data storage unit 184 is designated using the user program 162 or the like which will be described below. More specifically, the time series data storage unit 184 stores each piece of the data in the form of a record. A data structure of each record will be described below.

The chapter information storage unit 186 stores chapter information for associating designated timings and the data stored in the time series data storage unit 184. The chapter information storage unit 186 manages registration of the chapter information related to the time series data, searches using the chapter information, and the like. The chapter information storage unit 186 may be realized as a file of the database including the chapter information.

The data search processing unit 188 searches for data stored in the time series database 180 and outputs a result of the search. More specifically, the data search processing unit 188 acquires time series data designated from the time series data storage unit 184 in response to a request (query) from the application 190 executed on the CPU unit 100, an application 210 executed on the support device 200, and the like with the time series data while referring to the chapter information stored in the chapter information storage unit 186. As described above, when an instruction for specific chapter information is received, the data search processing unit 188 searches for the specific chapter information from the chapter information stored in the chapter information storage unit 186 and searches for data corresponding to the specific chapter information among the data stored in the time series data storage unit 184 based on the searched one or a plurality pieces of chapter information.

The application 190 is an arbitrary program executed on the CPU unit 100, and typically, a program using the time series data stored in the time series database 180 is assumed. For example, an application in which machine learning is performed on the time series data stored in the time series database 180 as learning data and then any kind of determination is made may be assumed. As described above, the application 190 issues an instruction for specific chapter information to the data search processing unit 188.

The application 210 is an arbitrary program executed on the support device 200 and typically, a program using the time series data stored in the time series database 180 is assumed. For example, so-called data mining in which the CPU unit 100 analyzes the time series data stored in the time series database 180 to discover any trend, a feature amount associated with a trend, or the like may be assumed. Alternatively, an application in which various statistical processes are executed on the time series data stored in the time series database 180, or an application in which numerical values of the time series data stored in the time series database 180 are displayed or graphs indicating visual data and the like are displayed may be assumed. As described above, the data search processing unit 188 receives an instruction for specific chapter information from outside of the control device 10 and executes the above-described search process.

### <E. Data structure>

Next, an example of a data structure for realizing the time series database 180 will be described.

### (e1: Time series database 180)

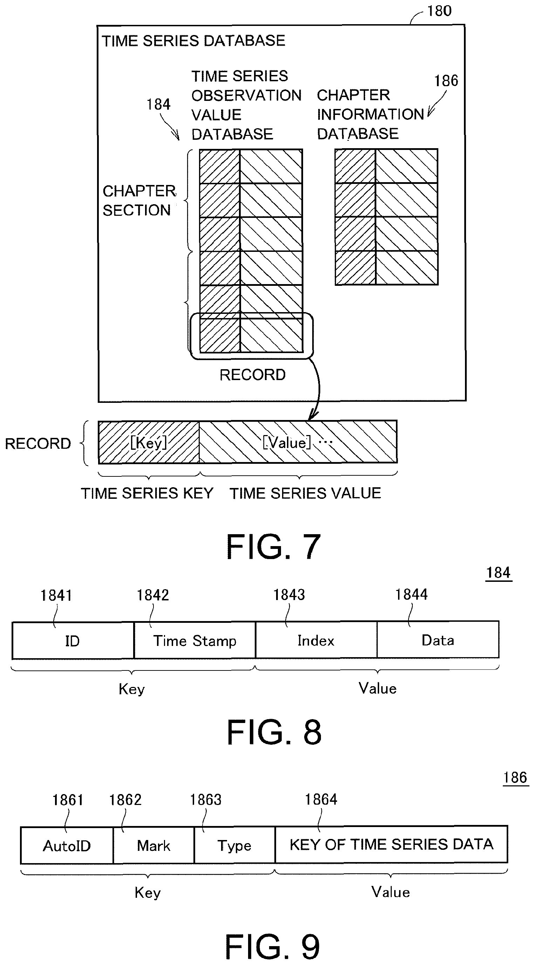

FIG. 7 is a schematic diagram for outlining a data structure of the time series database 180 built in the control device 10 according to the present embodiment. Referring to FIG. 7, a concept of time series data handled by the time series database 180 can be said as "time series." One time series may be composed of a database with a plurality of levels. In the present embodiment, a database with a plurality of levels includes a time series observation value database stored in the time series data storage unit 184 and a chapter information database stored in the chapter information storage unit 186. A plurality of time series can be generated and, for example, a time series may be generated for each application in the time series database 180. Each database file may have a distinctive attribute such as a version.

The time series observation value database stores time series data. The chapter information database stores index information for referring to chapter information to be given to time series data and the like.

The time series observation value database stores time series data in units of a record which is a minimum unit of data. Each record may employ a key-value store type. If the key-value store type is employed for records, data to be stored (values) and unique indicators (keys) corresponding to the data are associated and stored. That is, each record includes a key and a value of the key-value store type.

More specifically, a time series key indicating an indicator of time series data and a time series value indicating a value of the time series data are stored in each record constituting the time series observation value database.

With respect to a time series according to the present embodiment, a gap between adjacent pieces of chapter information on a time axis thereof to which chapter information is added is also referred to as a "chapter section" for the sake of convenience in description. A length of a "chapter section" on the time axis, however, is not necessarily fixed, and may be arbitrarily set by a user, an external factor, or the like. A chapter section may be associated with a unit of a lot or a unit of tact as described above.

In addition, the chapter information database may store one or a plurality of records of the key-value store type, similarly to the time series observation value database.

### (e2: Time series observation value database)

Next, an example of a data structure of each record constituting the time series observation value database shown in FIG. 7 will be described in more detail.

The time series data storage unit 184 stores each record associated with an indicator (key) including information for specifying a timing or a time point and data (a value) including an observation value corresponding thereto in a time series manner. FIG. 8 is a schematic diagram for outlining the data structure of a record of the time series observation value database stored in the control device 10 according to the present embodiment. Referring to FIG. 8, the record of the time series observation value database includes an ID 1841 and a time stamp 1842 as a key.

Arbitrary identification information associated with data to be stored may be used as the ID 1841. The time stamp 1842 corresponds to information for specifying a timing or a time point, and for example, counter information or time point information managed by the CPU unit 100 for storing arbitrary data is used.

The record of the time series observation value database includes an index 1843 and an observation value 1844 as a value. The index 1843 is a value that increments or decrements by a predetermined value in accordance with a data storage operation. Typically, a value that increments by one each time an observation value is stored is used. With regard to the observation value 1844, the database write program 164 is called out by a command defined by the user program 162 and records including an observation value designated by the database write program 164 are sequentially written in the time series observation value database.

### (e3: Chapter information database)

Next, an example of a data structure of a record constituting the chapter information database shown in FIG. 7 will be described in more detail.

The chapter information storage unit 186 stores a record associated with an indicator (a key) including information indicating a type of chapter information and an indicator (a value) of a record of the time series data storage unit 184 serving as a reference target. FIG. 9 is a schematic diagram for outlining the data structure of a record of the chapter information database stored in the control device 10 according to the present embodiment. Referring to FIG. 9, the record of the chapter information database includes an AutoID 1861, a chapter information identifier 1862, and a chapter information type 1863 as a key.

The AutoID 1861 corresponds to identification information sequentially updated according to a prescribed rule, and a value that increments or decrements by a predetermined value in accordance with registration of chapter information is used. Typically, a value that increments by one each time chapter information is registered is used.

The chapter information identifier 1862 corresponds to identification information for specifying chapter information, and an arbitrary value to be used in a data search performed with reference to the chapter information is used. For example, a sequence of letters, a numeral value, date information, time point information, and the like may be used as the chapter information identifier 1862. A value stored as the chapter information identifier 1862 may be defined by the user program 162.

The chapter information type 1863 corresponds to information indicating a type of chapter information, and a value indicating a type or a meaning of chapter information to be added is used. For example, a value indicating a start of a certain chapter section, a value indicating an end of a certain chapter section, a value indicating that a certain chapter section is further divided, or the like may be used. That is, the chapter information type 1863 may define that corresponding chapter information indicates one of a start of a chapter section and an end of a chapter section.

In addition, the record of the chapter information database includes key content 1864 corresponding to the time series observation value database as a value. That is, the value of the record of the chapter information database includes the corresponding indicator (the key) of the record of a reference target in the time series data storage unit 184. For the key content 1864 corresponding to the time series observation value database, information (a key) for specifying each record of the time series observation value database of which chapter information is to be registered is stored. As described above, the value of the record of the chapter information database is used as a search key for searching for a target record among a plurality of records included in the time series observation value database. A search method using the chapter information database and the time series observation value database will be described below.

### <F. Chapter information>

Next, chapter information according to the present embodiment will be described in detail.

### (fl: Registration of chapter information)

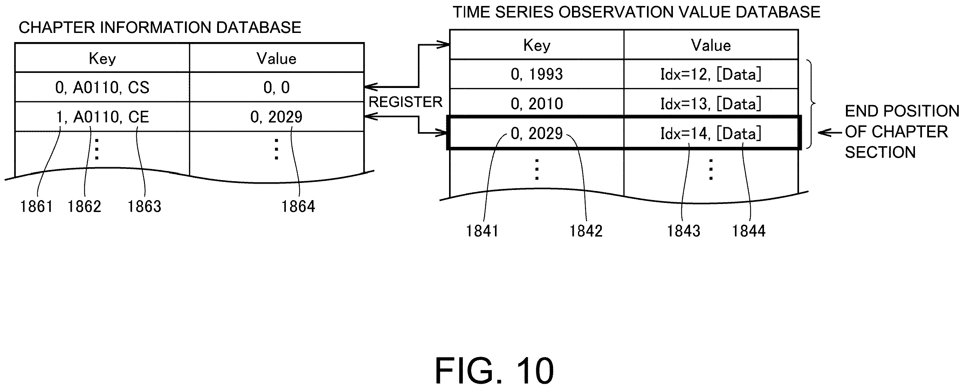

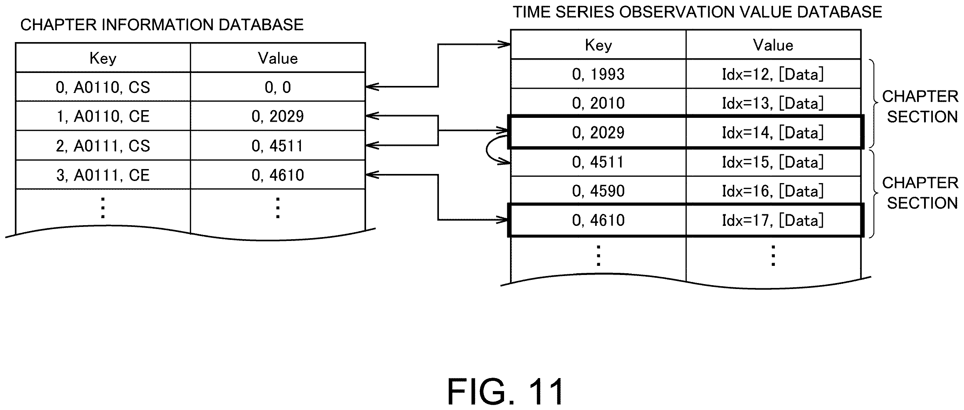

First, a process of registering chapter information will be described. FIGs. 10 and 11 are schematic diagrams for describing a process of registering chapter information in the control device 10 according to the present embodiment. Referring to FIG. 10, records including observation values designated in a pre-designated period are registered in the time series observation value database in a time series manner.

The data storage processing unit 182 (see FIG. 6) provided as a system service of the time series database 180 is assumed to hold information of the latest records registered in the time series observation value database. It is assumed that the user program 162 calls out the database write program 164 and instructs registration of chapter information at an arbitrary timing. In the example shown in FIG. 10, it is assumed that the chapter information database has information indicating a record of a start of a chapter section registered earlier therein and then registration of an end position of the chapter section is instructed at an arbitrary timing. At this time, the chapter information database has a record having a combination of a key including information based on the instruction and a value including a key of a corresponding record of the time series observation value database registered therein.

A key of a record registered in the chapter information database includes an Auto ID 1861, a chapter information identifier 1862, and a chapter information type 1863 as described above. In the example shown in FIG. 10, a value "1" obtained by incrementing a value "0" which is the AutoID 1861 of a previously registered record by 1 is registered as the AutoID 1861. In addition, arbitrary information indicating a target chapter section ("A0110" in this example) is registered as the chapter information identifier 1862. Further, information indicating a type of chapter information of the corresponding record is registered as the chapter information type 1863. For example, "CS" is registered if the record means a start position of a chapter section and "CE" is registered if the record means an end position of the chapter section.

Meanwhile, the key content 1864 corresponding to the time series observation value database is registered as a value of the record registered in the chapter information database. Note that registered pieces of key content 1864 may be differently handled in accordance with meanings of corresponding chapter information. Specifically, in a case in which a target record indicates a start position of a chapter section, the next record after a record of the time series observation value database referred to by the target record becomes a leading position of a corresponding chapter section. On the other hand, in a case in which a target record indicates a dividing position of a chapter section, the next record after a record of the time series observation value database referred to by the target record becomes a leading position of a new corresponding chapter section.

By repeating the registration procedure as described above, one or a plurality of records corresponding to a chapter section set for the time series observation value database are registered in the chapter information database as shown in FIG. 11.

As described above, upon receiving an instruction to register chapter information, the data storage processing unit 182 stores information indicating a type of the chapter information (the chapter information type 1863) included in the instruction and information for specifying the latest data stored in the time series data storage unit 184 at the timing at which the instruction is received (the key content 1864) in the chapter information storage unit 186 as chapter information.

### (f2: Data search using chapter information)

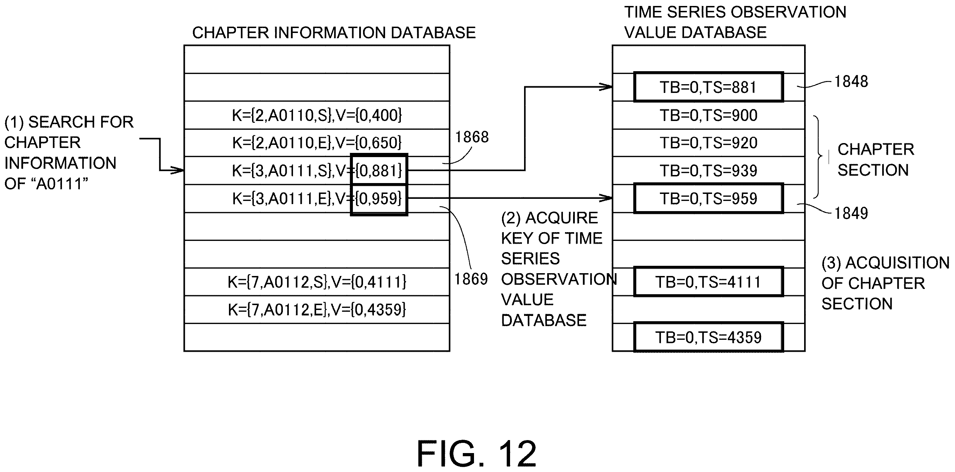

Next, a process of searching for time series data using chapter information will be described. FIG. 12 is a schematic diagram for describing a data search process using chapter information of the control device 10 according to the present embodiment.

FIG. 12 shows an example of the process performed when a set of records (chapter sections) corresponding to specific chapter information (e.g., "A0111") is searched for. Referring to FIG. 12, when an arbitrary application or the like transmits a search request (a query) with the fact that specific chapter information has been designated to the data search processing unit 188 (see FIG. 5), the data search processing unit 188 searches the chapter information database by using the designated chapter information as a search key. More specifically, the data search processing unit 188 searches for a record including chapter information designated in a key of the record among records included in the chapter information database. Note that FIG. 12 shows an example in which "K" indicates keys of the records included in the chapter information database and "V" indicates values thereof.

It is assumed in the example shown in FIG. 12 that the chapter information database is searched ((1) chapter information of "A0111" is searched) based on the designated chapter information "A0111" and two records (a first record 1868 and a second record 1869) appear.

The time series observation value database is referred to based on values of the searched records. That is, keys of the time series observation value database are acquired from the values of the searched records ((2) keys of the time series observation value database are acquired).

In the example shown in FIG. 12, "0, 881" is stored for the value of the first record 1868 and "881" which is a second element of the value indicates a time stamp value stored as a key of a record of the time series observation value database. Likewise, "0, 959" is stored for the value of the second record 1869, and "959" which is a second element of the value indicates a time stamp value stored as a key of a record of the time series observation value database.

The time series observation value database is searched with the time stamp values being set as search keys. In the example shown in FIG. 12, a first record 1848 in which "TB=0, TS=881" is set as a key and a second record 1849 in which "TB=0, TS=959" is set as a key have been searched.

A range of a chapter section set for the time series observation value database is specified based on the searched first record 1848 and second record 1849 as described above ((3) acquisition of a chapter section).

In the series of data search processes described above, a record having designated chapter information and/or a chapter section defined by two records can be acquired from records included in the time series observation value database.

### <G. Application example of chapter information>

Next, several application examples with respect to collection, searching, and the like of time series data using chapter information in the control system 1 according to the present embodiment will be introduced.

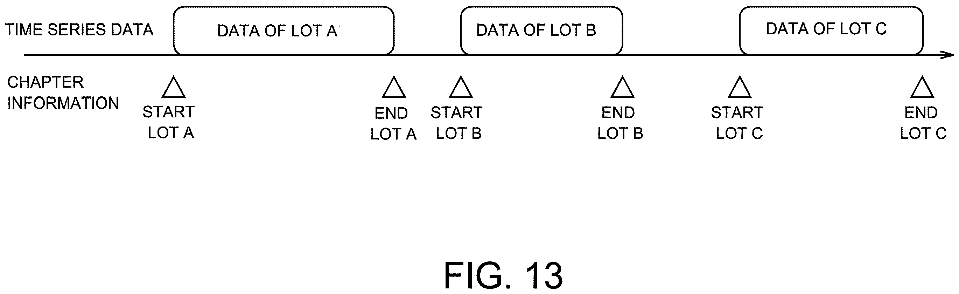

FIG. 13 is a schematic diagram showing an example in which the control system 1 according to the embodiment is applied to a production line on which production is performed in lots. Referring to FIG. 13, for example, pieces of chapter information indicating starts and ends of production lots and tact times may be sequentially registered for a manufacturing device or a production line on which production is performed in lots. In this case, time series data may be collected for periods in which production of each lot is performed.

By adding chapter information as shown in FIG. 13, a specific manufacturing lot is designated and thus only time series data corresponding to this manufacturing lot can be easily extracted. By collecting time series data in units of lots, management of quality traceability can be realized for each lot.

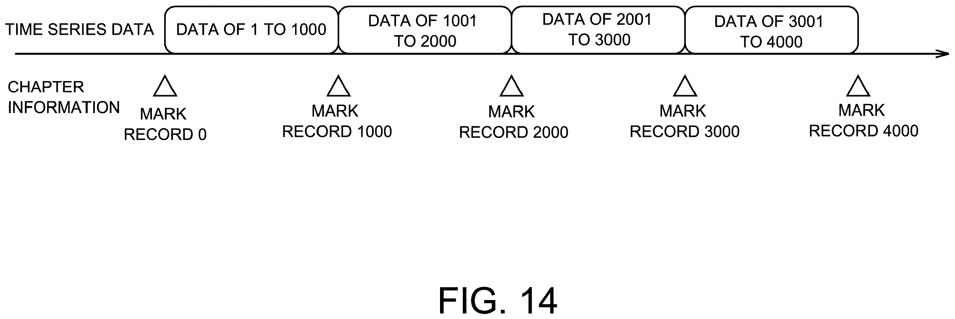

FIG. 14 is a schematic diagram showing an example in which the control system 1 according to the present embodiment is applied to a continuous series system having no temporal segments. Referring to FIG. 14, in the continuous series system having no temporal segments such as a process system (for flow rate control or temperature control as an example), for example, pieces of chapter information may be sequentially registered in a periodic manner (e.g., every 10 seconds or for every 1000 records).

By adding the chapter information as shown in FIG. 14, only pieces of time series data of necessary sections can be extracted from a large quantity of continuous time series data. By periodically adding the chapter information, continuously collected data such as logging data can be organized in units of data amounts making a statistical process or the like easy. Accordingly, management of quality traceability, failure detection based on a trend, and the like can be realized.

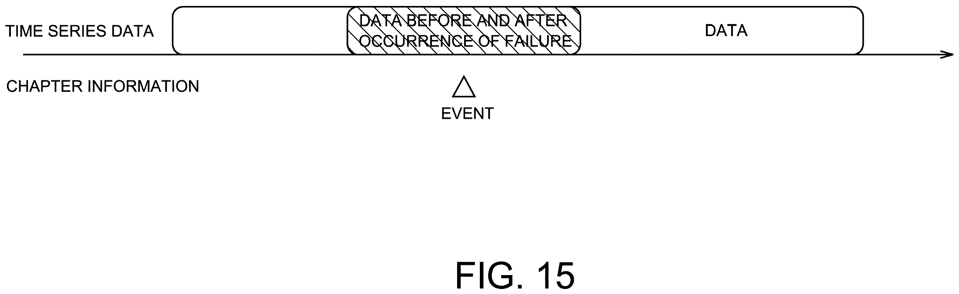

FIG. 15 is a schematic diagram showing an example in which the control system 1 according to the present embodiment is applied to a system in which an event occurs. Referring to FIG. 15, for example, chapter information may be recorded with a device failure or abnormality occurrence as a trigger. By recording chapter information as described above, only data before and after a device failure or abnormality occurrence corresponding to an event can be extracted from data collected for a predetermined period of time or in a continuous manner.

By adding the chapter information in accordance with an event as described above, analysis of data before and after a device failure or abnormality occurrence (statistical analysis or data mining) can be facilitated and failure factors or characteristics thereof can be specified. In other words, the system can be applied to analysis of failure factors and abnormal factors.

### <H. Collection of time series data and setting of chapter information>

Next, an example in which collection of time series data and setting of chapter information are performed as described above will be described.

### (h1: Method using user program)

As a typical method, collection of time series data and setting of chapter information may be performed in the user program 162. In this case, commands for using the time series database 180 are available in the user program 162 executed in the control device 10.

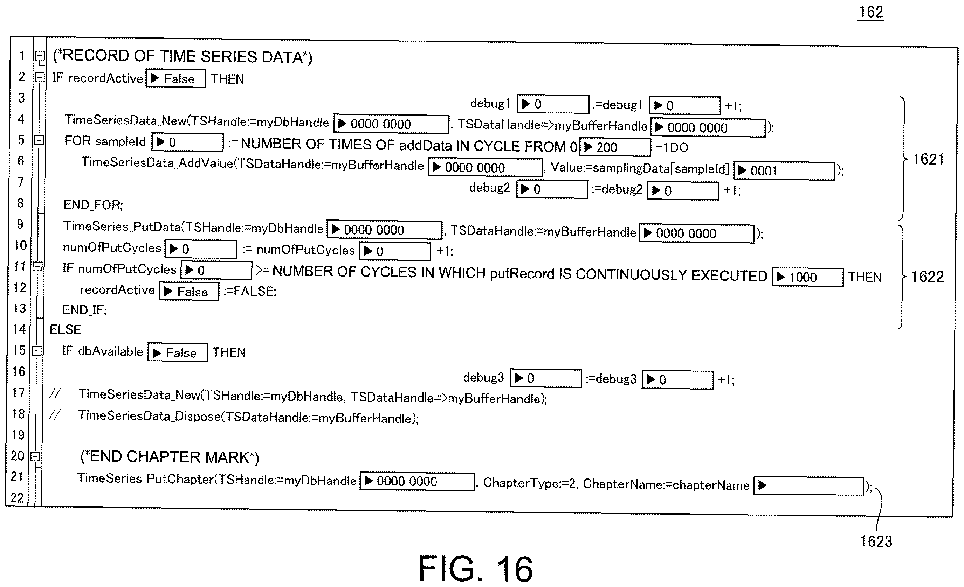

FIG. 16 is a diagram showing an example of the user program 162 executed in the control device 10 according to the present embodiment. The user program 162 shown in FIG. 16 includes a command 1621 for creating time series data (each record), a command 1622 for writing the generated time series data in the time series database 180, and a command 1623 for registering chapter information.

A user describes commands necessary for the user program 162 in accordance with a collection cycle, a collection timing, and the like of the observation values desired to be collected. An arbitrary description format can be used without being limited to the description format of the program as shown in FIG. 16.

### (h2: Method using embedded program)

A method using an embedded program may be employed, rather than a method in which necessary commands are described in the user program 162. In that case, the database write program 164 (refer to FIG. 5) may be installed for use. The database write program 164 collects time series data and stores the collected time series data in the time series database 180 in accordance with a pre-designated user setting (including a target observation value, a cycle, and the like). At this time, a condition for adding chapter information (any start time and end time) may be set. Furthermore, conditions for a start and an end of data collection may be set for the time series database 180.

If such an embedded program is used, a configuration for collecting time series data with a simple setting can be realized for users who do not want to make a change in the existing user program 162 or do not want to create a new user program while wanting to use the time series database 180, and the like.

### <1. Modified example>

Although a form of the above-described control system 1 shown in FIG. 6 in which the application 210 executed in the support device 200 accesses the time series database 180 of the CPU unit 100 has been exemplified, the embodiment of the invention is not limited thereto. For example, a configuration in which functions of the CPU unit 100 including the time series database 180 and functions for setting and operating the CPU unit 100 are executed using common hardware resources may be employed.

### <J. Advantages>

According to the control device of the above-described embodiment, a large volume of time series data including logging data can be efficiently managed by adding chapter information to the time series data. That is, by designating arbitrary chapter information, time series data corresponding thereto can be searched and extracted from a large volume of time series data. In particular, since a unit of a cycle in which the control device collects observation values is in an order of msec, efficient management of data is effectively realized by adding chapter information. Since time series data can be efficiently managed, satisfactory data processing can be realized in data mining, statistical processes, machine learning, and the like.

For example, since a chapter of a manufacturing lot or a tact time (a start and an end) and an event such as occurrence of a failure can be associated with time series data such as logging data, necessary data can be extracted from a large volume of time series data.

In a time series database in which chapter information is not added as described above, there is no other means for users or the like to sequentially search for sections to be searched for using a sliding window in order to search for the target time series data, but this problem can be solved with the control device of the above-described embodiment.

### [Explanation of Labels]

2 first field bus; 4 second field bus; 6 field device group; 10 control device; 12 remote I/O device; 14 relay group; 16 I/O unit; 18 image sensor; 20 camera; 22 servo driver; 24 servo motor; 100 CPU unit; 102 processor; 104 chipset; 106 main memory device; 108 secondary memory device; 118 field bus controller 1; 110 upper network controller; 112 USB controller; 114 memory card interface; 116 memory card; 118 field bus controller 1; 120 field bus controller 2; 122 internal bus controller; 124-1, 124-2 I/O unit; 150 PLC engine; 160 control program; 162 user program; 1621, 1622, 1623 command; 164 database write program; 166 serialized communication program; 170 system program; 180 time series database; 190 application; 180 time series database; 182 data storage processing unit; 184 time series data storage unit; 1841 ID; 1842 time stamp; 1843 index; 1844 observation value; 1848 first record; 1849 second record; 186 chapter information storage unit; 1861 AutoID; 1862 chapter information identifier; 1863 chapter information type; 1864 key content; 1868 first record; 1869 second record; 188 data search processing unit; 210 application; 200 support device; 300 display device.

## Claims

1. A control device (10) comprising:
a time series data storage unit (184), storing designated data in a time series manner;
a chapter information storage unit (186), storing chapter information for associating a designated timing with data stored in the time series data storage unit (184); and
a data storage processing unit (182), controlling storage of data in the time series data storage unit (184) and storage of chapter information in the chapter information storage unit (186),
wherein, when the data storage processing unit (182) receives an instruction to register chapter information, the data storage processing unit (182) stores information indicating a type of chapter information included in the instruction and information for specifying the latest data stored in the time series data storage unit (184) at a timing at which the instruction is received in the chapter information storage unit (186) as chapter information.

2. The control device (10) according to claim 1, wherein the time series data storage unit (184) stores a record in which an indicator including information specifying a timing or a time point is associated with data including an observation value corresponding to the information in a time series manner.

3. The control device (10) according to claim 2, wherein the chapter information storage unit (186) stores a record in which an indicator including information indicating a type of chapter information is associated with an indicator of a record of the time series data storage unit (184) serving as a reference target.

4. The control device (10) according to claim 3, wherein an indicator of each record stored in the chapter information storage unit (186) comprises identification information sequentially updated in accordance with a prescribed rule, identification information for specifying chapter information, and information indicating a type of chapter information.

5. The control device (10) according to claim 4, wherein the type of chapter information defines that the corresponding chapter information indicates one of a start of a chapter section and an end of a chapter section.

6. The control device (10) according to any one of claims 1 to 5, further comprising:
a data search processing unit (188), searching for specific chapter information from the chapter information stored in the chapter information storage unit (186) when an instruction to search for the specific chapter information is received, and searches for data corresponding to the specific chapter information among the data stored in the time series data storage unit (184) based on the searched one or a plurality of pieces of chapter information.

7. The control device according to claim 6, further comprising:
an application (190) that issues an instruction for the specific chapter information to the data search processing unit (188).

8. The control device (10) according to claim 6 or 7, wherein the data search processing unit (188) receives an instruction for the specific chapter information from outside of the control device (10).
